# EUROPÄISCHE PATENTSCHRIFT

(11) **EP 1 565 288 B1**
(45) Veröffentlichungstag und Bekanntmachung des Hinweises auf die Patenterteilung: **23.08.2006**
(21) Anmeldenummer: 03812117.4
(22) Anmeldetag: 30.05.2003
(51) Int. Cl.: B23K 26/04

(54) **VERFAHREN ZUR BESTIMMUNG DER FOKUSLAGE EINES LASERSTRAHLS**
METHOD FOR DETERMINING THE FOCAL POSITION OF A LASER BEAM
PROC D POUR D TERMINER LA POSITION FOCALE D'UN FAISCEAU LASER

(30) Priorität: 28.11.2002 DE 10255628
(43) Veröffentlichungstag der Anmeldung: 24.08.2005
(73) Patentinhaber: Hitachi Via Mechanics, Ltd., Ebina-Shi Kanagawa 243-0488 (JP)
(72) Erfinder: HILLEBRAND, Dirk, 76646 Bruchsal (DE); MAYER, Hans, Jürgen, 68519 Viernheim (DE); OVERMANN, Christian, 22045 Hamburg (DE)
(74) Vertreter: Beetz & Partner
(86) Internationale Anmeldenummer: PCT/DE2003/001780
(87) Internationale Veröffentlichungsnummer: WO 2004/050290

(56) Entgegenhaltungen:
- US-A- 4 633 074

## Beschreibung

Die Erfindung betrifft ein Verfahren zur Bestimmung der Fokuslage eines Laserstrahls in einer Maschine zur Bearbeitung von Substraten, insbesondere von elektrischen Schaltungssubstraten. US 4633074 A offenbart ein solches Verfahren.

Für die Bearbeitung von Substraten, beispielsweise von Leiterplatten oder anderen Schaltungssubstraten, ist es wichtig und notwendig, daß die Fokuslage des Laserstrahls relativ zur Tisch- bzw. zur Bearbeitungsebene sehr genau bekannt ist. Deshalb ist die Bestimmung der Fokuslage ein wichtiger Schritt bei der Inbetriebnahme einer Laserbearbeitungsmaschine, doch ist eine Überprüfung dieser Fokuslage bzw. eine erneute Bestimmung auch während des Betriebs immer wieder erforderlich. Deshalb muß die Fokuslagenbestimmung einfach, objektiv und reproduzierbar durchführbar sein.

Bisher ist es üblich, die Fokusbestimmung manuell mit Hilfe eines Mikroskops durchzuführen und auszuwerten. Damit ist dieser Vorgang abhängig von der durchführenden Person und von der Qualität des verwendeten Meßgerätes, nämlich des Mikroskops. Somit ist diese Methode nicht nur zeitaufwendig, sondern durch die Abhängigkeit von der jeweiligen Person mit einer wechselnden Fehlerquelle behaftet.

Ziel der vorliegenden Erfindung ist es, ein Verfahren für die Bestimmung der Fokuslage in einer Laserbearbeitungsmaschine anzugeben, daß personenunabhängig, also objektiv ist und eine Bestimmung der Fokuslage schnell und mit hoher Genauigkeit ermöglicht.

Erfindungsgemäß wird die Fokuslage deshalb mit folgenden Schritten durchgeführt:
- mit dem Laserstrahl wird eine Mehrzahl von linienförmigen Mustern auf der Oberfläche eines Mustersubstrats erzeugt, wobei der Abstand zwischen der Abbildungseinheit des Laserstrahls und der ebenen Substratoberfläche schrittweise verändert wird,
- die Linienbreite aller Muster wird gemessen und dem jeweiligen Abstandswert zugeordnet, und
- das Muster mit der geringsten Linienbreite wird ermittelt, und der zugehörige Abstandswert wird als Fokuseinstellung des Laserstrahls identifiziert.

Bei der Erfindung werden also die nebeneinander liegenden Linien in verschiedenen vorgegebenen Abstandshöhen strukturiert. Dabei ist die schmalste Linienbreite identisch mit der Fokuslage, die dann bei der Auswertung als Parameter übernommen werden kann. Da die nebeneinander angeordneten linienförmigen Muster, die beispielsweise in Form von geraden Linien oder von nebeneinander liegenden Kreisen erzeugt werden können, sich voneinander aufgrund der schrittweise verändernden Abstände unterscheiden, ist eine direkte visuelle Auswertung möglich, so daß auch eine manuelle Bestimmung ohne Mikroskop in vielen Fällen möglich ist. Trotzdem ist der Vergleich der Linienbreiten objektiv möglich.

In bevorzugter Ausgestaltung wird die Linienbreite der einzelnen Muster mit Hilfe einer Kamera gemessen und bestimmt. Dabei kann personenunabhängig die Fokuslage auf 100 µm genau bestimmt werden. Somit ist es möglich, bei der vollständigen Umsetzung des Verfahrens einen Automatismus zu erstellen, der vollautomatisch mit hoher Geschwindigkeit die Fokussuche durchführt, wobei die Fehlereinflußfaktoren durch individuelle Beurteilung minimiert werden. Vorzugsweise wird dabei eine Kamera verwendet, die in der Maschine für die Erkennung von Markierungen und Lagern ohnehin vorhanden ist. Die Kamera kann mit ähnlichen Algorithmen und Prüfprogrammen arbeiten, wie sie auch für die Fiducialerkennung bzw. die Kalibrierung verwendet werden. Es könnte natürlich auch eine zusätzliche externe Kamera für diesen Zweck verwendet werden. Außerdem besteht die Möglichkeit, bei der Kamera mit einem Zoom-Objektiv zu arbeiten, falls die strukturierte Linienbreite für bestimmte Anwendungen oder Laserwellenlängen zu klein wird.

Wie erwähnt, werden bei dem erfindungsgemäßen Verfahren die linienförmigen Muster in verschiedenen Höhenlagen, d.h. in einem x-y-z-Koordinatensystem mit unterschiedlichen z-Werten realisiert. Die Festlegung der Differenz der verschiedenen z-Höhen erlaubt eine Grob- und eine Feinsuche. Bei der Grobsuche ist die Höhendifferenz zwischen den einzelnen Strukturierungsschritten größer als bei einer Feinsuche. Darüber hinaus kann mit der Auswahl der Suchschritte auch auf unterschiedliche Schärfentiefen der unterschiedlichen Wellenlängen (bei gleicher Brennweite) reagiert werden. So ist die Schärfentiefe bei einem CO₂-Laser (mit der Wellenlänge 9,25 µm) viel größer als bei einem UV-Laser mit einer Wellenlänge von 355 nm. Das bedeutet, daß die Änderung der strukturierten Linienbreite in Abhängigkeit von der Veränderung der z-Höhe beim CO₂-Laser geringer ist als beim UV-Laser.

Die Erfindung wird nachfolgend an Ausführungsbeispielen anhand der Zeichnung näher erläutert. Es zeigt
Figur 1 eine schematische Darstellung einer Laserbearbeitungsanordnung bei einer erfindungsgemäßen Fokusbestimmung, Figur 2 ein Ablaufdiagramm für eine automatische Fokussuche gemäß der Erfindung,
Figur 3 die schematisierte Darstellung eines für die Fokusbestimmung erzeugten Musters mit geraden Linien und
Figur 4 die schematisierte Darstellung eines für die Fokusbestimmung erzeugten Musters in Form von kreisförmigen Linien.

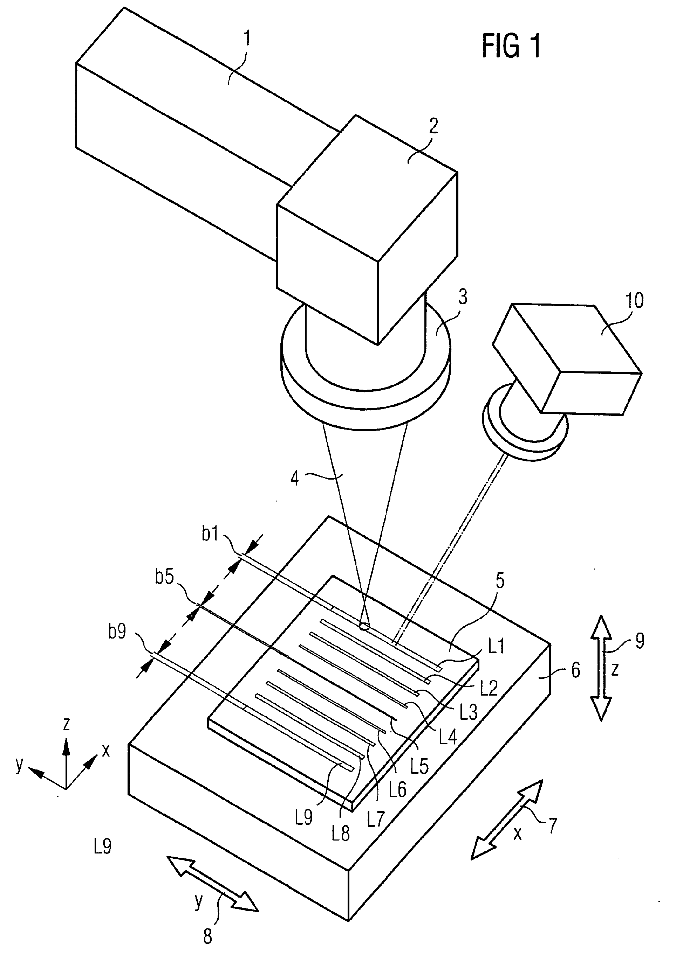

Figur 1 zeigt die grundsätzliche Anordnung einer Lasermaschine für die Bearbeitung von Leiterplatten oder ähnlichen Substraten. Dabei erzeugt ein schematisch dargestellter Laser 1 über eine Ablenkeinheit 2, beispielsweise mit nicht gezeigten Galvospiegeln, und eine Abbildungseinheit bzw. Linse 3 einen Laserstrahl 4. Durch die Brennweite der Linse 3 ist ein Fokus F eingestellt. Das zu bearbeitende Substrat 5 wird auf einem Tisch 6 angeordnet, der in einem x-y-z-Koordinatensystem über einen entsprechenden x-Antrieb 7, einen y-Antrieb 8 und einen z-Antrieb 9 verstellt werden kann. Die Antriebe 7, 8 und 9 sind schematisch durch Doppelpfeile angedeutet. Durch den x-Antrieb 7 und den y-Antrieb 8 wird das Substrat 5, soweit es sich um ein ebenes Substrat handelt, in einer festgelegten Bearbeitungsebene verstellt, so daß der jeweils vorgesehene Bearbeitungspunkt von dem Laserstrahl 4 erfaßt wird. Über den z-Antrieb 9 wird die Höhe des Tisches 6 bzw. des Substrats 5 verstellt, wodurch der Abstand zum Laser verändert wird. Somit wird das Substrat je nach Bedarf gezielt in die Fokuslage bezüglich des Laserstrahls oder gezielt außer Fokus gebracht. Je weiter die Oberfläche des Substrats 5 außerhalb des Fokus liegt, um so größer ist der Fleckdurchmesser des auftreffenden Laserstrahls, um so geringer auch die wirksame Energiedichte. Für die gezielte Bearbeitung des Substrats 5 ist deshalb eine genau Bestimmung der Fokuslage des Lasers in bezug auf die z-Höhe des Tisches 6 erforderlich.

Für die Ermittlung der Fokuslage wird erfindungsgemäß ein Mustersubstrat 5 auf dem Tisch 6 plaziert, und mit dem Laserstrahl werden Musterlinien, im gezeigten Beispiel von Figur 1 jeweils gerade Linien L1 bis L9, erzeugt. Dabei wird der Tisch 6 in der Höhe schrittweise verstellt, so daß jeder Linie L1 bis L9 eine andere z-Höhe (z1 bis z9) zuzuordnen ist.

Mit einer Kamera 10, beispielsweise mit einer in der Maschine ohnehin angebrachten Kamera, die für die Fiducial- und Lageerkennung verwendet wird, lassen sich die einzelnen Musterlinien gezielt anfahren, und es kann die jeweilige Linienbreite b auf dem Substrat bestimmt werden. Jeder Linienbreite b (b1 bis b9) ist also eine bestimmte z-Höhenlage des Tisches zugeordnet. Durch Bestimmung der minimalen Linienbreite bₘᵢₙ wird die Fokuslage ermittelt, und die zugehörige z-Höhenlage des Tisches 6 wird als Fokusposition gekennzeichnet.

Es ergibt sich also eine Zuordnung nach folgender Tabelle:

| | | | | | | | | | |
|---|---|---|---|---|---|---|---|---|---|
| Linie | L1 | L2 | L3 | L4 | L5 | L6 | L7 | L8 | L9 |
| z-Lage | z1 | z2 | z3 | z4 | z5 | z6 | z7 | z8 | z9 |
| Linienbreite | b1 | b2 | b3 | b4 | b5 | b6 | b7 | b8 | b9 |

In dem Beispiel von Figur 1 hat die Linie L5 die geringste Breite b5 (=bₘᵢₙ). Demnach wird die zugehörige Höhe z5 als Fokuslage identifiziert und im System gespeichert.

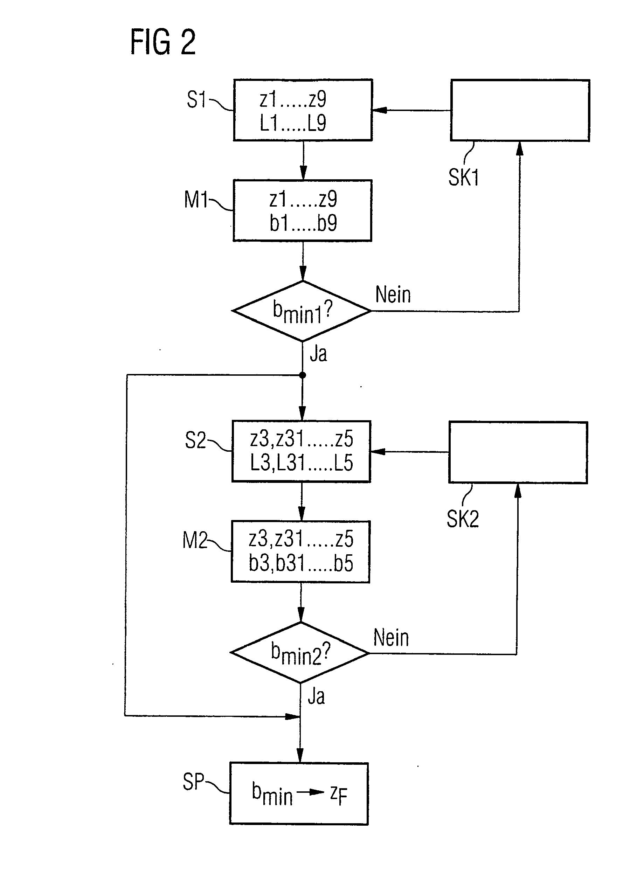

Praktisch werden die unterschiedlichen Höhen durch das Strukturieren in verschiedenen Höhenpositionen mit vorgegebenen z-Werten realisiert. Dabei erlaubt die Festlegung der Differenz der verschiedenen z-Höhen eine Grob- und eine Feinsuche. Im Ablaufdiagramm von Figur 2 ist ein solches Verfahren beispielshalber gezeigt. In einem ersten Such-Schritt S1 wird zunächst eine Grobpositionierung durchgeführt. Das heißt, es werden verschiedene Höhenpositionen mit den Werten z1 bis z9 angefahren, wobei jeweils eine Linie L1 bis L9 erzeugt wird. Im nächsten Schritt M1 werden die Linienbreiten b1 bis b9 gemessen und den Höhenwerten z1 bis z9 zugeordnet. Aus den Meßwerten b1 bis b9 wird eine minimale Linienbreite bₘᵢₙ₁ ermittelt, falls ein Minimalwert im Verlauf der gemessenen Linienbreiten erkennbar ist. Wird bei der Messung der Linienbreiten jedoch kein Minimum durchlaufen, was dann der Fall ist, wenn die kleinste gemessene Linienbreite am Ende der Meßreihe liegt, so muß die Grobsuche im Schritt S1 mit neuen z-Werten durchgeführt werden. Über den Schritt SK1 werden deshalb weitere z-Werte im Anschluß an den bisherigen z-Wert mit der kleinsten Linienbreite vorgegeben (z.B. z9 bis z15). Dann kann eine neue Meßreihe mit den Schritten S1 und M1 durchgeführt werden.

Ist in der Grobsuche ein erster minimaler Breitenwert bₘᵢₙ₁ ermittelt worden, dann kann in einer Feinsuche der Fokusabstand noch genauere bestimmt werden. Es werden in einem zweiten Such-Schritt S2 weitere z-Werte im Bereich beiderseits des bisher ermittelten Minimalwertes bₘᵢₙ₁ bzw. dem zugehörigen z-Wert vorgegeben, beispielsweise zwischen den Höhenwerten z3 und z5 feine z-Lagenwerte z31, z32 usw. Entsprechend diesen feineren Höhendifferenzen werden wiederum zugehörige Musterlinien L3, L31, L32 ... bis L49, L5, gemessen. Aus den gemessenen Linienbreiten wird dann wiederum ein Minimalwert bₘᵢₙ₂ bestimmt, und der zugehörige z-Höhenwert z_{F} wird als Fokuslage des Tisches bzw. des Substrats bestimmt und in einem Schritt SP gespeichert.

Für die Feinsuche gilt dann beispielsweise folgende Tabelle:

| | | | | | | |
|---|---|---|---|---|---|---|
| Linie | L3 | L31 | L32 | L42 | L49 | L5 |
| z-lage | z3 | z31 | z32 | z42 | z49 | z5 |
| Linie breite | b3 | b31 | b32 | b42 | b49 | b5 |

Ergibt der Breitenvergleich ein Minimum für b42, so entspricht der zugehörige Höhenwert z42 der Fokuslage, und er wird als z_{F} gespeichert.

Natürlich kann der zweite Suchschritt je nach den Umständen auch entfallen; dann wird, wie in Figur 2 gezeigt, der Wert bₘᵢₙ₁ unmittelbar im Schritt SP gespeichert.

Die Kamera kann dabei mit ähnlichen Algorithmen und Prüfprogrammen arbeiten, wie sie auch für die Fiducialerkennung bzw. Kalibrierung der Maschine verwendet werden. Anstelle der hierfür vorgesehenen Kamera könnte aber auch eine zweite, externe Kamera zusätzlich vorgesehen werden. Außerdem besteht die Möglichkeit, bei der Kamera mit einem Zoom-Objektiv zu arbeiten, falls die strukturierte Linienbreite für bestimmte Anwendungen oder Laserwellenlängen zu klein wird.

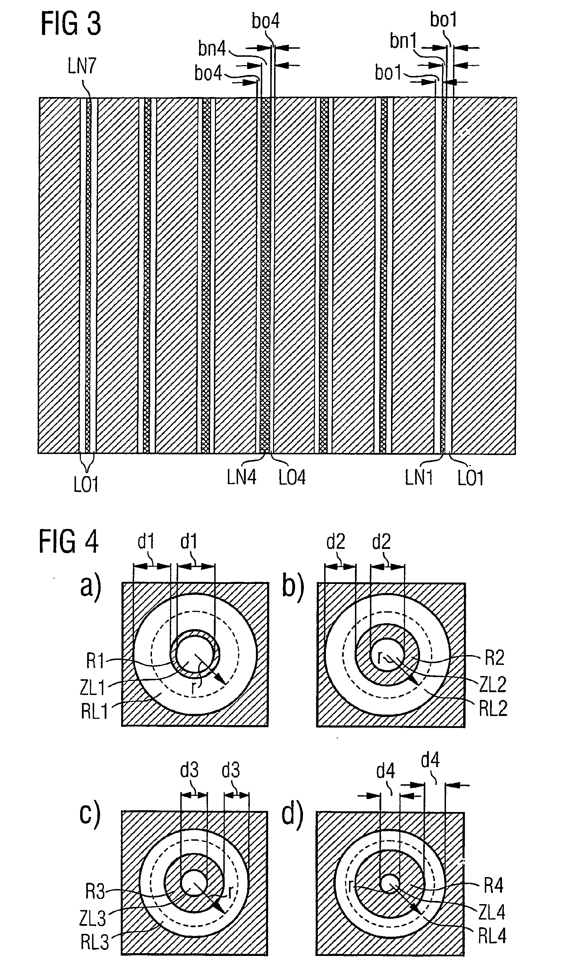

Um die einzelnen Musterlinien auch bei kleinen Höhenschritten gut unterscheidbar zu machen, kann das Mustersubstrat mit einer bestimmten Oberfläche versehen werden. So ist in Figur 3 beispielsweise ein Muster gezeigt, das auf einem eloxierten Aluminiumplättchen mittels CO₂-Laserstrahlung erzeugt wird. Dabei entsteht die Linienstruktur durch das thermische Umwandeln des Eloxals. Die Güte und die Dimension der Linienstruktur ist abhängig von der Fokusgröße und der damit verbundenen Energiedichte. Im Zentralbereich des Laserstrahls kommt es, bedingt durch die hohe Energiedichte, zur Verdampfung des Eloxals und zur Nitrierung des Aluminiums, was sich in einer goldfarbigen Linie äußert. Im Randbereich wandelt sich das Eloxal durch die Wärmebeaufschlagung in Aluminiumoxid um, das durch eine weiße Färbung kenntlich ist. Beide Farbbereiche sind im Gegensatz zu dem schwarz oder dunkel eloxierten Aluminium deutlich zu erkennen.

Eine Auswertung ist hierbei dadurch möglich, daß mit einer Defokussierung die Fokusabmessungen und damit verbunden die Energiedichte variieren, was sich in unterschiedlichen Linienbreiten des Aluminiumnitrids einerseits und des Aluminiumoxids andererseits je nach Fokushöhe äußert. So nimmt mit besserer Fokussierung die Breite der nitrierten Spur zu und die Breite der Aluminiumoxidspur ab. In Figur 3 ist im Randbereich eine Breite bn1 der Nitridschicht LN1 gezeigt, die kleiner ist als eine Breite bn4 der Nitridschicht LN4 etwa in der Mitte des Substrats, die demnach eine bessere Fokussierung anzeigt. Umgekehrt ist die Breite bo1 der Aluminiumoxidschicht LO1 am Rand größer als die entsprechende Breite bo4 der Aluminiumoxidschicht L04im Mittelbereich bzw. bei besserer Fokussierung. Da bei dieser Art von Linienerzeugung jeweils unterschiedliche Linien entstehen, die sich mit der Fokussierung entgegengesetzt verhalten, sind auch zwei unterschiedliche Auswertungsverfahren oder auch eine Kombination beider Meßverfahren denkbar. Die Fokusbestimmung anhand der Oxidspurbreite ist bei einer Schwarz-Weiß-Kamera-Auswertung besser geeignet, da der helle nitrierte Bereich nicht ohne weiteres von dem hellen Oxidbereich getrennt werden kann. Um Schlagschatten zu vermeiden, sollte die Beleuchtung so gewählt werden, daß sie möglichst von oben auf das Target trifft. Eine Kamera mit Bilderkennung detektiert für eine bestimmte Anzahl von Fokushöhen die korrelierende Linienbreite und gibt den Wert aus oder speichert ihn für eine interne Weiterverarbeitung ab. Die Fokuslagenermittlung resultiert dabei aus der Bestimmung des Minimums des polynomischen Fits zweiter Ordnung aller ermittelten Werte. Ein polynomischer Fit wird durchgeführt, um Meßfehler zu unterdrücken. Das so ermittelte Minimum korreliert mit der Fokuslage des Systems.

In Figur 4 ist in einem weiteren Ausführungsbeispiel ein Muster zur Fokuslagenbestimmung gezeigt, das aus kreisförmigen Mustern besteht. Dabei wird jeweils ein Kreismuster derart strukturiert, daß zunächst ein Laserimpuls auf den Kreismittelpunkt gesetzt wird, wobei ein Loch ZL mit dem Fleckdurchmesser d erzeugt wird, und daß dann ein Kreis mit einem vorgegebenen Radius r um diesen Mittelpunkt herum strukturiert wird. Je nach Fokussierung sind der Durchmesser d des zentralen Loches ZL und die Breite d des äußeren Rings RL, die im Bild weiß erscheinen, größer oder kleiner; beide entsprechen jeweils dem Fleckdurchmesser entsprechend der Fokussierung des Laserstrahls. Zwischen dem zentralen Loch ZL und dem äußeren Ring RL bleibt ein dunkler Ring R übrig, dessen Breite durch die Größenänderung sowohl des zentralen Lochs ZL und des äußeren Ringloches RL gleichzeitig beeinflußt wird, so daß diese Größenänderung besonders deutlich ist und leicht gemessen werden kann.

Die Figur 4a zeigt den Fall für einen am stärksten außer Fokus eingestellten Laserstrahl. In diesem Fall ist der Fleckdurchmesser d1 besonders groß, und der verbleibende Ring R1 ist besonders schmal. In den nachfolgenden Figuren 4b, 4c und 4d wird der Fleckdurchmesser d2, d3 und d4 immer kleiner. Entsprechend werden auch die Löcher ZL2, RL2, ZL3, RL3 und ZL4, RL4 zunehmend kleiner, während der dazwischen verbleibende dunkle Ring R2, R3 und schließlich R4 immer breiter wird. Figur 4d zeigt somit die optimale Fokussierung des Laserstrahls. Eine weitere Veränderung des Abstandes zwischen Laser und Mustersubstrat würde wieder zu einer Defokussierung, also zu einer Vergrößerung des Fleckdurchmessers führen. Auf 4d würde also wieder ein Muster entsprechend 4c folgen.

## Patentansprüche

1. Verfahren zur Bestimmung der Fokuslage eines Laserstrahls (4) in einer Maschine zur Bearbeitung von Substraten (5) insbesondere von elektrischen Schaltungssubstraten, durch folgenden Schritten **gekennzeichnet**:
- mit dem Laserstrahl (4) wird eine Mehrzahl von linienförmigen Mustern (L1 bis L9; L01, LN1 bis L07, LN7; ZL1, RL1 bis ZL4, RL4) auf der Oberfläche eines Mustersubstrats (5) erzeugt, wobei der Abstand zwischen der Abbildungseinheit (3) des Laserstrahls (4) und der ebenen Substratoberfläche schrittweise verändert wird,
- für jedes erzeugte Muster (L1 bis L9; L01, LN1 bis L07, LN7; ZL1, RL1 bis ZL4, RL4) wird der zugehörige Abstandswert (z1 bis z9) gespeichert,
- die Linienbreite (b1 bis b9; bo1, bn1 bis bo7, bn7; d1 bis d4) aller Muster (L1 bis L9; L01, LN1 bis L07, LN7; ZL1, RL1 bis ZL4, RL4) wird gemessen und dem jeweiligen Abstandswert zugeordnet (M1, M2) und
- das Muster mit der geringsten Linienbreite (bₘᵢₙ) wird ermittelt, und der zugehörige Abstandswert (z_{F}) wird als Fokuseinstellung des Laserstrahls (4) identifiziert.

2. Verfahren nach Anspruch 1,
**dadurch gekennzeichnet , daß** in einem ersten Meßdurchgang (S1,M1) der Abstand zwischen der Abbildungseinheit (3) des Laserstrahls (4) und dem Mustersubstrat (5) in großen Schritten (z1 bis z9) verändert wird, um einen groben Fokusbereich (bₘᵢₙ₁) zu ermitteln, und daß in einem zweiten Meßdurchgang (S2, M2) der Abstand zwischen der Abbildungseinheit (3) des Laserstrahls (4) und dem Mustersubstrat (5) in kleinen Schritten (z3, z31...z49, z5) innerhalb des ermittelten Fokusbereiches verändert wird, um eine genaue Fokuseinstellung (z_{F})zu identifizieren.

3. Verfahren nach Anspruch 1 oder 2,
**dadurch gekennzeichnet , daß** die Größe der Suchschritte in Abhängigkeit von der Wellenlänge des Laserstrahls (4) gewählt wird, wobei die Suchschritte um so größer sind, je größer die Wellenlänge ist.

4. Verfahren nach einem der Ansprüche 1 bis 3,
**dadurch gekennzeichnet , daß** als Mustersubstrat (5) eine eloxierte Aluminiumplatte verwendet wird, wobei durch die von dem Laserstrahl erzeugte Linienstruktur (LO1,LN1 bis LO4, LN4) die Eloxalschicht im Zentralbereich des Laserstrahls verdampft und das darunterliegende Aluminium nitriert wird, während im Randbereich das Eloxal in Aluminiumoxid umgewandelt wird, und wobei mit zunehmender Fokussierung die Breite (bn) der nitrierten Spur (LN) zunimmt und die Breite (bo) der Oxidspur (LO) abnimmt, derart, daß für die Auswertung wahlweise die Breitenentwicklung der Nitridspur (LN) und/oder der Oxidspur (LO) herangezogen wird.

5. Verfahren nach einem der Ansprüche 1 bis 4,
**dadurch gekennzeichnet , daß** die Muster in Form einer Kreislinien-Struktur (ZL1, RL1 bis ZL4, RL4) erzeugt werden.

6. Verfahren nach einem der Ansprüche 1 bis 5,
**dadurch gekennzeichnet , daß** die Linienbreite (bn) bzw. die Strukturbreite der Muster mit Hilfe einer Kamera (10) gemessen wird und daß die Meßdaten mittels bekannter Bildverarbeitungsalgorithmen ausgewertet werden.

## Claims

1. Method for determining the focal position of a laser beam (4) in a machine for machining substrates (5), particularly electrical circuit substrates, **characterised by** the following steps:
- a plurality of linear patterns (L1 to L9; L01; LN1 to L07, LN7; ZL1, RL1 to ZL4, RL4) is produced with the laser beam (4) on the surface of a template substrate (5), in which the distance between the imaging unit (3) of the laser beam (4) and the even substrate surface is modified gradually,
- for every pattern produced (L1 to L9; L01, LN1 to L07, LN7; ZL1, RL1 to ZL4, RL4) the associated distance value (z1 to z9) is stored,
- the line width (b1 to b9; bo1, bn1 to bo7, bn7; d1 to d4) of all patterns (L1 to L9; L01, LN1 to L07, LN7; ZL1, RL1 to ZL4, RL4) is measured and allocated to the relevant distance value (M1, M2) and
- the pattern with the least line width (bₘᵢₙ) is determined and the associated distance value (Z_{F}) is identified as the focal setting of the laser beam (4).

2. Method according to claim 1,
**characterised in that** in a first measurement run (S1, M1) the distance between the imaging unit (3) of the laser beam (4) and the template substrate (5) is modified in large steps (z1 to z9), in order to determine a rough focal area (bₘᵢₙ₁) and that in a second measurement run (S2, M2), the distance between the imaging unit (3) of the laser beam (4) and the template substrate (5) is modified in small steps (z3, z31 ... z49, z5) within the determined focal area, in order to identify an exact focal setting (Z_{F}).

3. Method according to claim 1 or 2,
**characterised in that** the size of the scanning steps is selected depending on the wave length of the laser beam (4), in which the larger the wavelength is the larger the scanning steps are.

4. Method according to one of claims 1 to 3,
**characterised in that** an anodised aluminium plate is used as the template substrate (5), in which the line structure created by the laser beam (LO1, LN1 to LO4, LN4) vaporises the anodised layer in the central region of the laser beam and the underlying aluminium is nitrified, whilst in the edge region the anodised aluminium is converted into aluminium oxide, and in which with increasing focussing, the width (bn) of the nitrified track (LN) increases and the width (bo) of the oxide track (LO) decreases in such a way that the width development of the nitride track (LN) and / or alternatively of the oxide track (LO) is used for evaluation.

5. Method according to one of claims 1 to 4,
**characterised in that** the patterns are created in the form of a circular line structure (ZL1, RL1 to ZL4, RL4).

6. Method according to one of claims 1 to 5,
**characterised in that** the line width (bn) or the structure width of the pattern is measured by means of a camera (10) and that the measurement data are evaluated by means of known image processing algorithms.

## Revendications

1. Procédé pour déterminer la position focale d'un faisceau laser (4) dans une machine destinée à l'usinage de substrats (5), en particulier de substrats pour circuits électriques, **caractérisé par** les étapes suivantes :
- avec le faisceau laser (4), on produit une multitude de modèles prenant la forme de lignes (L1 à L9 ; L01, LN1 à L07, LN7, ZL1, RL1 à ZL4, RL4) sur la surface d'un substrat modèle (5), la distance séparant l'unité de réflexion (3) du faisceau laser (4) et la surface plane du substrat étant modifiée progressivement,
- pour chaque modèle produit (L1 à L9 ; L01, LN1 à L07, LN7, ZL1, RL1 à ZL4, RL4), la valeur de la distance associée (z1 à z9) est enregistrée,
- la largeur des lignes (b1 à b9 ; bo1, bn1 à bo7, bn7 ; d 1 à d4) de tous les modèles (L1 à L9 ; L01, LN1 à L07, LN7, ZL1, RL1 à ZL4, RL4) est mesurée et affectée à la valeur de distance respective (M1, M2) et
- le modèle ayant la largeur de lignes la plus faible (bₘᵢₙ) est déterminé et la valeur de distance associée (Z_{F}) est identifiée comme réglage focal du faisceau laser (4).

2. Procédé selon la revendication 1,
**caractérisé en ce que**,
dans une première opération de mesure (S1,M1), la distance séparant l'unité de réflexion (3) du faisceau laser (4) et le substrat modèle (5) est modifiée en de grandes étapes (z1 à z9) pour déterminer une zone focale (bₘᵢₙ₁) approximative et **en ce que**, dans une deuxième opération de mesure (S2, M2), la distance séparant l'unité de réflexion (3) du faisceau laser (4) et le substrat modèle (5) est modifiée en de petites étapes (z3, z31...z49, z5) à l'intérieur de la zone focale déterminée pour identifier un réglage focal précis (Z_{F})

3. Procédé selon la revendication 1 ou 2,
**caractérisé en ce que**
la grandeur des étapes de recherche est choisie en fonction de la longueur d'onde du faisceau laser (4), les étapes de recherche étant d'autant plus grandes que la longueur d'onde est grande.

4. Procédé selon l'une des revendications 1 à 3,
**caractérisé en ce que**
l'on utilise comme substrat modèle (5) une plaque en aluminium anodisée, où la couche anodisée est vaporisée dans la zone centrale du faisceau laser grâce à la structure en lignes produite par le faisceau laser (LO1, LN1 à LO4, LN4) et l'aluminium se trouvant dessous est nitruré, alors que la couche anodisée est transformée en oxyde d'aluminium dans la zone périphérique, la largeur (bn) de la trace de nitrure (LN) augmentant et la largeur (bo) de la trace d'oxyde (LO) diminuant à mesure que la focalisation augmente de sorte que l'on prend en compte, pour l'évaluation, au choix l'évolution de la largeur de la trace de nitrure (LN) et/ou de la trace d'oxyde (LO).

5. Procédé selon l'une des revendications 1 à 4,
**caractérisé en ce que**
les modèles sont produits sous la forme d'une structure en lignes circulaires (ZL1, RL1 à ZL4, RL4).

6. Procédé selon l'une des revendications 1 à 5,
**caractérisé en ce que**
la largeur des lignes (bn) ou la largeur de la structure des modèles est mesurée à l'aide d'une caméra (10) et que les données de mesure sont évaluées au moyen d'algorithmes de traitement d'image connus.
